## Europäisches Patentamt

## European Patent Office

## Office européen des brevets

(19)

(11) Veröffentlichungsnummer: **0 059 169**
**B1**

(12) **EUROPÄISCHE PATENTSCHRIFT**

(45) Veröffentlichungstag der Patentschrift:
28.03.84

(51) Int. Cl.³: **G 03 B 27/46**

(21) Anmeldenummer: **82810073.5**

(22) Anmeldetag: **16.02.82**

(54) **Vorrichtung zur Vorbereitung von Filmabschnitten mit Hinblick auf deren Durchlauf durch einen Kopierautomaten.**

(30) Priorität: **20.02.81 CH 1146/81**

(43) Veröffentlichungstag der Anmeldung:
**01.09.82 Patentblatt 82/35**

(45) Bekanntmachung des Hinweises auf die Patenterteilung:
**28.03.84 Patentblatt 84/13**

(84) Benannte Vertragsstaaten:
**CH DE FR GB IT LI**

(56) Entgegenhaltungen:
**DE - A - 2 234 895**
**DE - A - 2 518 580**
**DE - A - 2 557 755**

(73) Patentinhaber: **GRETAG Aktiengesellschaft,
Althardstrasse 70, CH-8105 Regensdorf (CH)**

(72) Erfinder: **Baschung, Michael, Bocklerstrasse 29,
CH-8051 Zürich (CH)**

(74) Vertreter: **Pirner, Wilhelm et al, Patentabteilung der
CIBA-GEIGY AG Postfach, CH-4002 Basel (CH)**

Vorrichtung zur Vorbereitung von Filmabschnitten mit Hinblick auf deren Durchlauf durch einen
Kopierautomaten

Die Erfindung betrifft eine Vorrichtung der im Oberbegriff des Patentanspruchs 1 genannten Art.

Bei der Durchführung von Nachbestellungsaufträgen ist es üblich, die gewöhnlich in mehr oder weniger langen, d.h. unterschiedlich viele Bildfelder umfassenden Filmstreifen vorliegenden Kopiervorlagen (Negativfilme) mittels eines Trägerbands zu einem zusammenhängenden Nachbestellband zusammenzufassen und dabei oder anschliessend einen Datenträger, beispielsweise etwa ein Magnetband, zu erstellen, auf dem alle Nachbestelldaten in fester Zuordnung zu den einzelnen Bildfeldern der Nachbestellrolle gespeichert sind. Das Nachbestellband kann dann aufgrund der gespeicherten Daten vollautomatisch weiterverarbeitet werden.

Den bei der Erstellung der Filmrolle und des zugehörigen Datenträgers nötigen Arbeitsabläufen kommt besondere Bedeutung zu, da diese praktisch die einzigen sind, die zurzeit noch nicht vollautomatisch durchgeführt werden können. Im allgemeinen werden dazu die Filmstreifen entweder nach oder unmittelbar vor dem Zusammenspleissen in einer Beobachtungsstation begutachtet und die Nachbestelldaten (Stückzahl und allfällige Korrekturdaten) werden dann für jedes einzelne Bildfeld eines Streifens in eine Speichereinrichtung eingegeben, wobei die eingegebenen Daten zur Kontrolle von einer Anzeige angezeigt werden.

Die bisher für solche Zwecke bekannten Vorrichtungen haben diverse Nachteile. So verschwindet z.B. die Anzeige der für ein Bildfeld bzw. einen Filmstreifen eingegebenen Daten, sobald die Eingabe für ein nächstfolgendes Bildfeld bzw. einen neuen Filmstreifen beginnt, oder es besteht keine unmittelbare räumliche Zuordnung zwischen Datenanzeige und entsprechendem Bild. Es ist daher nur schlecht oder gar nicht möglich, allfällige Fehleingaben nachträglich zu überprüfen und zu korrigieren.

Durch die Erfindung sollen nun diese Nachteile behoben und eine Vorrichtung der eingangs definierten Art derart verbessert werden, dass sie möglichst bequem und fehlerfrei bedient werden kann und allfällige Fehler leicht und einfach zu erkennen und korrigieren gestattet.

Die erfindungsgemässe Vorrichtung ist im Patentanspruch 1 beschrieben. Bevorzugte Ausgestaltungen ergeben sich aus den abhängigen Ansprüchen.

Kernstück der erfindungsgemässen Vorrichtung ist also eine bewegte Anzeige, bei der zumindest die Stückzahldaten in fester räumlicher Zuordnung mit den einzelnen Bildfeldern eines Filmstreifens über eine gewisse Strecke mitlaufen und erhalten bleiben und erst danach definitiv abgespeichert werden. Auf diese Weise hat die Bedienungsperson einen guten Überblick über die letzten Eingaben und kann allfällige Fehler leicht entdecken und dann durch einfache Manipulationen leicht korrigieren.

In der DE-A-22 34 895 ist ein Rollenkopiergerät beschrieben, bei dem die zusammengespleissten Filmstreifen durch eine Vorbetrachtungsstrecke geführt werden, wobei jedem Bildfeld Korrekturdaten zugeordnet werden. Entlang der Vorbetrachtungsstrecke ist eine Zeile von Leuchtdioden angeordnet, mit welchen markiert wird, für welches der Kopierstation am nächsten liegende Bildfeld noch keine Korrekturwert-Eingabe erfolgt ist (Cursor-Funktion), wobei dieser Leuchtdioden-Cursor in Zuordnung zum jeweiligen Bildfeld mit diesem mitläuft. Die eingegebenen Werte werden jedoch nicht angezeigt.

In der DE-A-25 18 580 ist ein Nachbestellsystem beschrieben, bei dem die auf Tabellen enthaltenen Nachbestellauftragsdaten auf einen Datenträger in Zuordnung zu den Bildfeldern der zusammengespleissten Filmstreifen übertragen werden. Die einzelnen Filmstreifen werden dabei in ein Beobachtungsfeld eingeführt, entlang dem Leuchtdioden in Zuordnung zu den Bildfeldern angeordnet sind. Die Leuchtdioden haben Cursor-Funktion und leuchten an denjenigen Stellen auf, bei denen vom zugeordneten Bildfeld eine Nachbestellung verlangt ist. An diesen Stellen kann ein Korrekturwert eingegeben werden. Eine Anzeige der Eingaben erfolgt jedoch ebenso wie beim Gerät der DE-A-22 34 895 nicht.

Die DE-A-25 57 755 beschreibt ein System zum Vorbereiten von Kopiervorlagen für den späteren Kopiervorgang. In einer Vorbetrachtungsstation wird dabei das Filmband mit einem Papierband verbunden, das zur Aufnahme von Kopierdaten vorgesehen ist. Längs einer Vorbetrachtungsstrecke ist eine Anzeige vorgesehen, auf der in fester Zuordnung zu den einzelnen Bildfeldern automatisch gemessene Korrekturdaten erscheinen. Diese Daten werden dann entweder abgelesen und von Hand auf den Papierstreifen geschrieben oder aber automatisch z.B. mittels Lochcode auf den Streifen übertragen. Einzelheiten zur Realisierung gehen aus der DE-A 25 57 755 nicht hervor.

Im folgenden wird die Erfindung anhand der Zeichnung näher erläutert. Es zeigen:

Fig. 1 eine vereinfachte, blockschematische Übersichtsdarstellung der Vorrichtung,
Fig. 2 ein elektrisches Blockschema und
Fig. 3–5 Flussdiagramme des Betriebsprogramms.

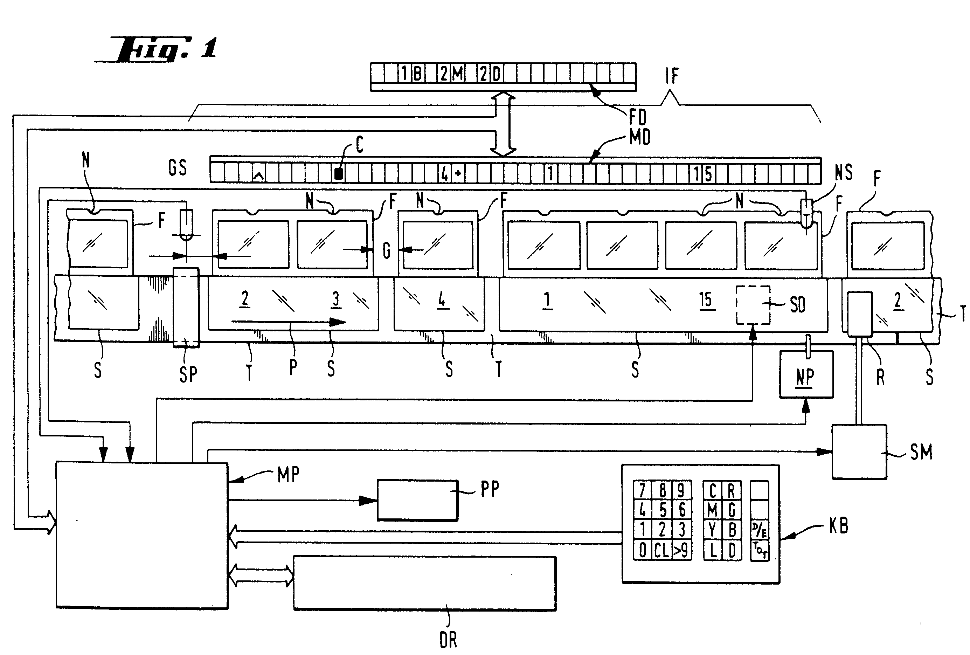

In Fig. 1 sind eine Reihe von unterschiedlich langen Filmabschnitten F zu erkennen, die je mit einem seitlich abstehenden Nachbestellstreifen S versehen und in bekannter Weise mittels eines Trägerbands T zu einem zusammenhängenden Nachbestellband zusammengefügt sind. Die Nachbestellstreifen S könnten natürlich auch fehlen, in welchem Falle die Filmabschnitte F direkt am Trägerband T befestigt wären.

Das Nachbestellband durchläuft auf einem nicht dargestellten Inspektionstisch oder dergleichen in Richtung des Pfeils P eine Inspektions- und Eingabestrecke IF, welche durch zwei Sensoren GS und NS begrenzt ist. Der einlaufseitige Sensor GS tastet die vorlaufenden und die nachlaufenden Kanten der Filmstreifen F ab, während der auslaufseitige Sensor NS auf die in den Filmstreifen F vorhandenen Positionskerben N reagiert. Zum Transport des Nachbestell-Bands ist ein durch einen Schrittmotor SM angetriebenes Walzenpaar R vorgesehen. Eine in Fig. 1 nicht dargestellte Wickelvorrichtung W wickelt das Band nach dem Verlassen der Eingabestrecke zu einer Rolle auf. Auf der Höhe des Sensors GS ist ferner eine Spleissvorrichtung SP angeordnet, in welcher die einzelnen Filmstreifen F mit dem Trägerband T verbunden werden.

Parallel zur Bahn des Nachbestellbands angeordnet ist innerhalb der Eingabestrecke IF zwischen den beiden Sensoren GS und NS eine langgestreckte, vielstellige alphanumerische Anzeige MD sowie darüber eine zweite, kleinere alphanumerische Anzeige FD. Die beiden Anzeigen geben die über eine Tastatur KB eingegebenen Nachbestelldaten optisch wieder.

Ferner umfasst die dargestellte Vorrichtung noch einen Kerbenstanzer NP zum Kopieren der vom Kerbenabtaster NS erfassten Positionskerben N in das Trägerband T, einen Streifendrucker SP zum Bedrucken der Nachbestellstreifen S bzw. des Trägerbands T mit nachbestellspezifischen Daten, einen Taschendrucker PP zum Bedrucken von Auftragstaschen, ein Magnetband-Datenaufzeichnungsgerät DR und ein alle die genannten Funktionseinheiten steuerndes Mikroprozessorsystem MP.

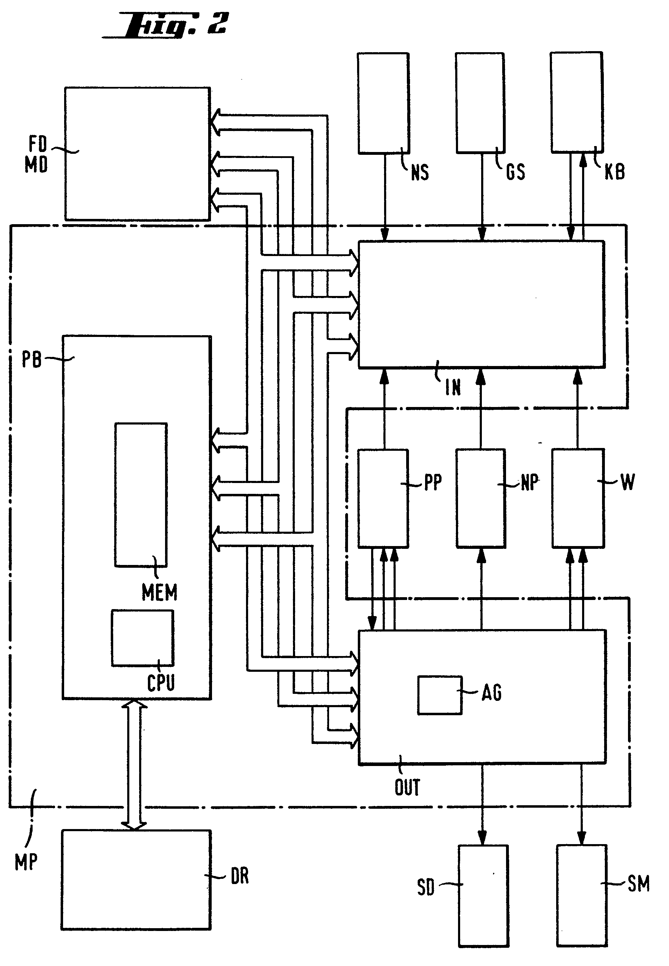

In Fig. 2 ist die elektrische Zusammenschaltung der einzelnen Teile nochmals übersichtlicher dargestellt. Das Mikroprozessorsystem MP umfasst eine Prozessorplatine PB mit dem eigentlichen Prozessor CPU und Programm- und Arbeitsspeichern MEM etc. sowie je eine Eingangs- und eine Ausgangsplatine IN bzw. OUT, welche die Verbindung zu den genannten Peripherie-Funktionseinheiten herstellen. Die Ausgangsplatine OUT enthält ausser diversen Treiberschaltungen zusätzlich noch einen Alarmgeber AG zur akustischen Anzeige fehlerhafter oder unerlaubter Betriebszustände.

Die Funktionsweise der Vorrichtung ist wie folgt:

Wenn ein Filmstreifen F in Pfeilrichtung P in die Eingabestrecke einläuft, wird er zunächst vorgeschoben, bis der vordere Sensor GS die nachlaufende Kante des Streifens F erkennt. Von dort erfolgt dann noch unmittelbar ein genau definierter, dem (konstanten) Zwischenraum G zwischen aufeinanderfolgenden Filmstreifen F entsprechender Vorschub, im folgenden Gap-Vorschub genannt. Daraufhin wird das Band angehalten. Auf der unteren, längeren Anzeige MD erscheint nun an der Position des vordersten Bildfelds des gerade eingelaufenen Filmstreifens F ein blinkendes Leuchtzeichen C, ein sogenannter Cursor.

Dieser Cursor gibt an, für welches Bildfeld eines Streifens noch keine Eingabe erfolgt ist bzw. eine Eingabe zu machen ist. Mittels des Tastenfelds KB werden nun die Anzahl der von dem betreffenden Bildfeld herzustellenden Kopien sowie allfällige Korrekturdaten eingegeben. Die Kopienanzahl erscheint auf dem unteren Anzeigefeld MD, und zwar in genauer räumlicher Zuordnung zum jeweiligen Bildfeld und bleibt für alle innerhalb der Eingabestrecke befindlichen Bildfelder erhalten. Korrekturdaten werden auf dem oberen Anzeigefeld FD angezeigt, aber jeweils nur während der Eingabe. Nach dem durch die Stückzahleingabe bewirkten Abschluss der Dateneingabe verschwinden die Korrekturdaten wieder. Falls einem Bildfeld Korrekturdaten zugeordnet worden sind, wird dies auf der unteren Anzeige MD durch ein spezielles Zeichen, beispielsweise etwa ein Plus-Zeichen, neben der Stückzahl gekennzeichnet.

Nach dem Abschluss der Eingabe der Nachbestelldaten für das vorderste Bildfeld springt der Cursor C automatisch auf das einlaufseitig nächstfolgende Bildfeld, wonach für dieses die Eingabe zu erfolgen hat, usw. Wenn auf diese Weise alle Nachbestelldaten für den Filmstreifen F eingegeben und abgespeichert sind, wird, sobald ein neuer Filmstreifen den Sensor GS abdeckt, das ganze Nachbestellband nach rechts weiter transportiert, bis sich dieser neue Filmstreifen linksbündig innerhalb der Eingabestrecke befindet. Die am Anzeigefeld MD angezeigten Stückzahlen für den bzw. für die vorhergehenden Filmstreifen bleiben dabei erhalten und wandern mit in fester Zuordnung zu den betreffenden Filmstreifen bzw. dessen Bildfeldern. Nunmehr erfolgt die Eingabe der Nachbestelldaten für diesen Streifen F in genau derselben Weise wie für den ersten Filmstreifen, usw.

Wenn der Kerbensensor NS am rechten Ende der Eingabestrecke eine Positionskerbe N im Filmstreifenrand erkennt und gleichzeitig die für das betreffende Bildfeld eingegebene Stückzahl $\neq 0$ ist, wird das Nachbestellband kurz angehalten und mittels des Kerbenstanzers NP eine Kopie-Kerbe in das Trägerband T eingestanzt.

Wenn ein Bildfeld danach die Eingabestrecke verlässt, fällt die ihm zugeordnete Stückzahl aus dem Anzeigefeld MD. Bevor dies jedoch geschieht, wird der betreffende Wert mit den ihm allenfalls zugeordneten Korrekturdaten definitiv abgespeichert.

Solange sich ein Filmstreifen F bzw. seine Bildfelder innerhalb der Eingabestrecke zwischen den beiden Sensoren befindet, oder mit anderen Worten, solange die ihm zugeordneten Stückzahl-Daten noch innerhalb des Anzeigefelds erscheinen, können die angegebenen Nachbestelldaten noch korrigiert werden. Der Cursor C wird dazu mittels Tastatur KB auf die Stelle des zu korrigierenden Bildfelds gesetzt und die Korrektur dann entsprechend durchgeführt.

Zur Erleichterung und Vereinfachung der Endverarbeitung bei der Durchführung von Nachbestellaufträgen ist noch vorgesehen, gewisse auftragsspezifische Daten, wie etwa Auftragsnummer, Filmtyp etc. einzugeben und einerseits auf dem oberen Anzeigefeld FD für die Dauer des Durchlaufs der zu einem Auftrag gehörigen Filmstreifen anzuzeigen und anderseits diese Daten auch auf die Auftragstasche mittels des Taschendruckers PP und auf das Trägerband T mittels des Streifendruckers SP aufzudrucken.

Wenn auf diese Weise die Nachbestelldaten für den gesamten Nachbestellauftrag eingegeben sind, kann mittels der Tastatur KB der Auftrag abgeschlossen werden. Die Nachbestelldaten werden daraufhin mittels des Datenaufzeichnungsgeräts DR auf eine Magnetbandkassette überspielt. Diese Kassette gelangt dann zusammen mit der Nachbestell-Filmstreifenrolle zur weiteren Verarbeitung.

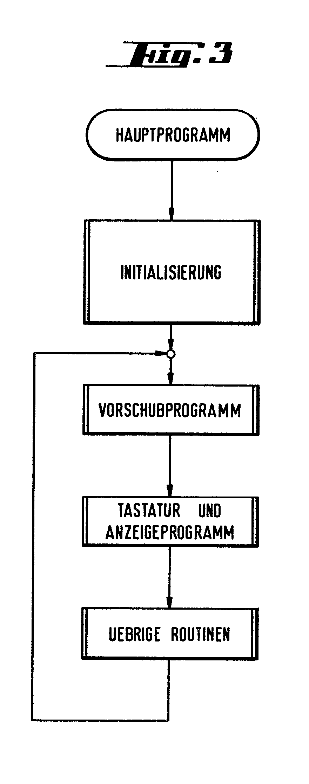

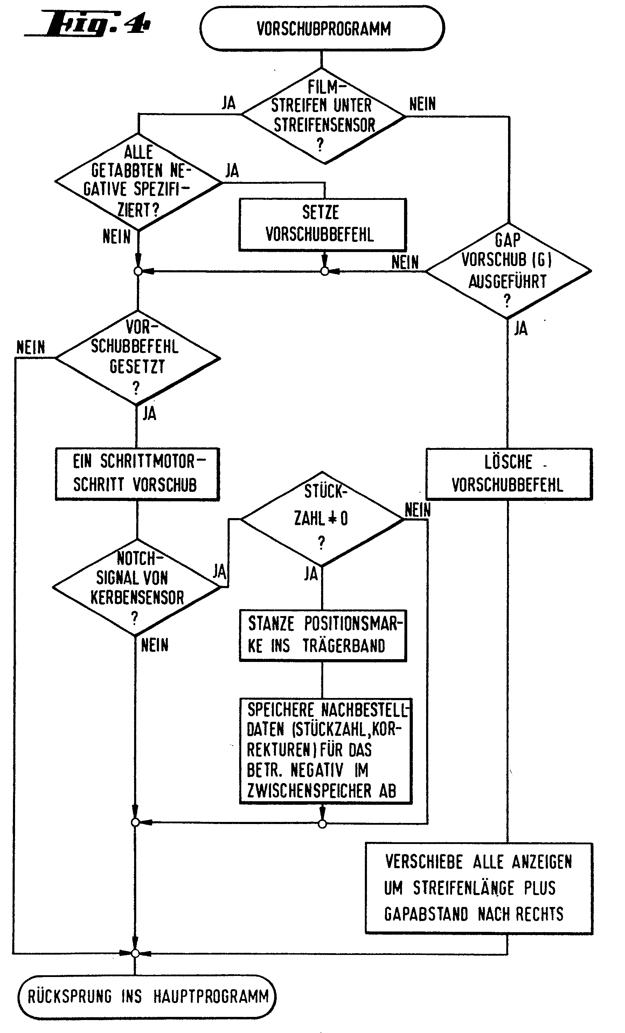

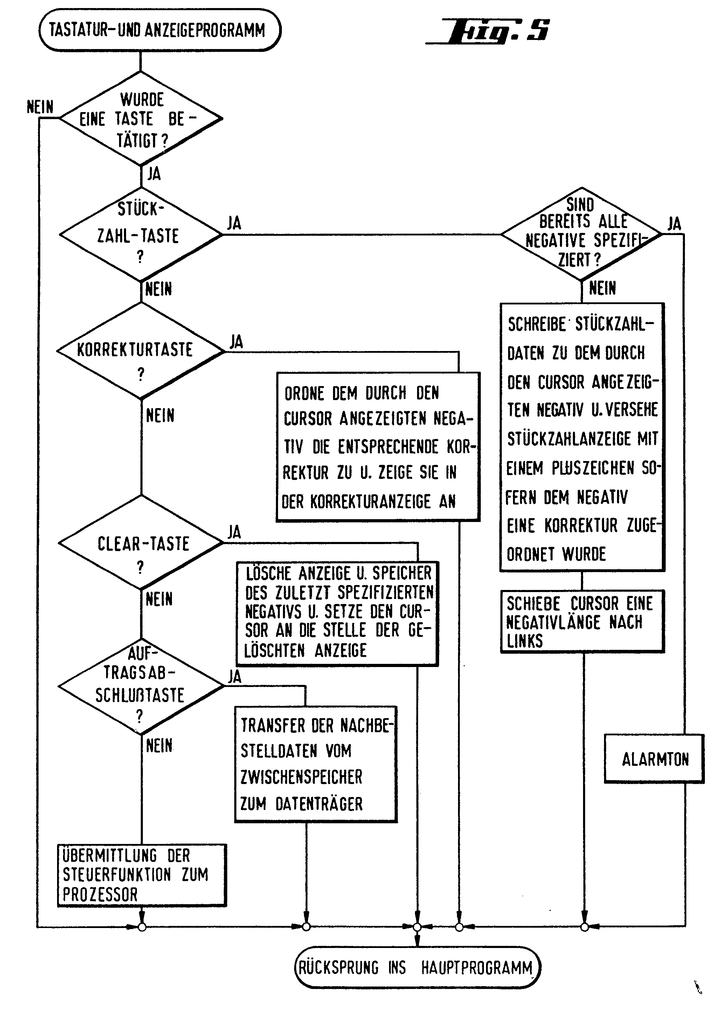

Wie schon erwähnt, ist die vorbeschriebene Vorrichtung von einem Mikroprozessorsystem gesteuert. Beispielsweise kann dafür etwa der INTEL-Mikroprozessor 8085 mit seinen zugehörigen Bausteinen verwendet werden. Details finden sich, soweit sie für den Fachmann nicht ohnehin notorisch sind, in den Daten- und Applikationsblättern der Hersteller. Die Programmabläufe für die Durchführung der wichtigsten Funktionsabschnitte sind in den in den Fig. 3–5 dargestellten Flussdiagrammen schematisch zusammengefasst. Die einzelnen Funktionsblöcke sind für den Fachmann aus sich heraus verständlich und bedürfen keiner Erläuterung.

**Patentansprüche**

1. Vorrichtung zur Vorbereitung von Filmabschnitten mit Hinblick auf deren Durchlauf durch einen Kopierautomaten, insbesondere für die Abwicklung von Nachbestellungsaufträgen, mit einer Transporteinrichtung zum Fördern der an einem Trägerband befestigten Filmabschnitte durch ein Beobachtungsfeld und mit einer Einrichtung zur Erstellung bzw. Ladung eines die Kopierdaten der einzelnen Bildfelder der Filmabschnitte in Zuordnung zu diesen enthaltenden Datenträgers bzw. -speichers, welche Einrichtung eine Tastatur zur Eingabe der Kopierdaten aufweist, dadurch gekennzeichnet, dass eine nichtbewegte Anzeigevorrichtung für die eingegebenen Daten vorgesehen ist und dass wenigstens ein Teil (MD) der Anzeige (MD, FD) sich im wesentlichen entlang des Beobachtungsfelds (IF) erstreckt, und dass elektrische Mittel (MP) vorgesehen sind, um einen Teil der eingegebenen Kopierdaten in direkter örtlicher Zuordnung zu den Bildfeldern der Filmabschnitte (F) auf diesem Teil (MD) der Anzeige erscheinen zu lassen und um die auf diesem Teil (MD) der Anzeige erscheinenden Daten im wesentlichen im Gleichtakt mit der Förderbewegung der Filmabschnitte (F) unter Wahrung der direkten örtlichen Zuordnung zu deren Bildfeldern mitlaufen zu lassen.

2. Vorrichtung nach Anspruch 1, dadurch gekennzeichnet, dass elektrische Mittel (MP) vorgesehen sind, um auf dem genannten Teil (MD) der Anzeige in direkter örtlicher Zuordnung zu den Bildfeldern der Filmstreifen (F) einen Zeiger (C) erscheinen zu lassen, welcher dasjenige Bildfeld markiert, welchem die augenblicklich eingegebenen Kopierdaten zugeordnet werden.

3. Vorrichtung nach einem der Ansprüche 1 und 2, dadurch gekennzeichnet, dass die elektrischen Mittel (MP) dazu ausgebildet sind, Stückzahl-Daten auf dem genannten Anzeigeteil (MD) erscheinen zu lassen.

4. Vorrichtung nach Anspruch 2, dadurch gekennzeichnet, dass die Anzeige einen zweiten Teil (FD) umfasst und dass die elektrischen Mittel (MP) dazu ausgebildet sind, Korrekturdaten für das durch den Zeiger (C) gerade markierte Bildfeld auf diesem Anzeigeteil erscheinen zu lassen.

5. Vorrichtung nach Anspruch 2, dadurch gekennzeichnet, dass die elektrischen Mittel (MP) den Zeiger (C) nach jeder abgeschlossenen Kopierdateneingabe automatisch um ein Bildfeld entgegen der Transportrichtung der Filmstreifen weiterbewegen und dass ein Alarm (AG) vorgesehen ist, der anspricht, wenn Stückzahldaten eingegeben werden und sich kein Zeiger (C) mehr im Anzeigeteil (MD) befindet.

6. Vorrichtung nach einem der vorangehenden Ansprüche, dadurch gekennzeichnet, dass ein Sensor (GS) für die Zwischenräume (G) zwischen aufeinanderfolgenden Filmstreifen (F) vorgesehen ist und dass dieser Sensor (GS) die Förderbewegung der Filmstreifen (F) im Zusammenwirken mit der Transporteinrichtung so steuert, dass jeweils ein vollständiger Filmstreifen (F), sofern seine Länge nicht die des Beobachtungsfelds (IF) überschreitet, in das Beobachtungsfeld eingeführt wird.

7. Vorrichtung nach einem der vorangehenden Ansprüche, dadurch gekennzeichnet, dass im wesentlichen am Ende des Beobachtungsfelds (IF) ein Kerbenabtaster (NS) und ein Kerbenstanzer (NP) angeordnet sind, welch letzter eine vom Kerbenabtaster (NS) erfasste Kerbe (N) im Rand eines Filmstreifens in das Trägerband (T) kopiert.

**Claims**

1. Apparatus for the preparation of sections of film for passage through a continuous printer, in particular for the processing of photographic print reorders, including a transport installation for the conveying of film sections mounted on a carrier strip through an inspection section and a device for generating and entering printing data for the individual image frames of the sections of film on a data carrier in coordination with the individual image frames, said device being equipped with a keyboard for entering the printing data, wherein there is provided a non-moving display for displaying the data entered and wherein at least one part (MD) of the display (MD, FD) extends essentially along the inspection section (IF), and including electrical means (MP) for effecting the display of at least a part of the entered printing data in direct positional coordination with the image frames of the film sections (F) on said part of the display and for causing the printing data appearing on said part (MD) of the display to move essentially in synchronization with the transport motion of the film sections (F), thereby maintaining direct positional coordination of said data with associated image frames of said film sections.

2. Apparatus according to claim 1, wherein there is provided electrical means (MP) for effecting the display of an indicator on said part (MD) of the display in direct positional coordination with the image frames of the film sections (F), said indicator marking the image frame to which the instantaneously entered printing data are being assigned.

3. Apparatus according to one of claims 1 and 2, wherein said electrical means (MP) causes the display of the number of reorder prints to appear on said display part (MD).

4. Apparatus according to claim 2, wherein the display comprises a second part (FD) and the electrical means (MP) causes the display of print correction data for the image frame instantaneously marked by the indicator (C) to appear on said second display part.

5. Apparatus according to claim 2, wherein the electrical means (MP) advances the indicator (C) automatically after the completion of each entering of printing data by an image frame, said indicator automatically moved against the conveying direction of the film strips, and wherein there is provided an alarm (AG) which is actuated when entering printing data although there is no longer an indicator (C) in said display part (MD).

6. Apparatus according to any one of the preceding claims wherein there is provided a sensor means (GS) for generating the gaps between successive film strips (F), said sensor means (GS) controlling the conveying motion of the film strips (F) in cooperation with the transport installation so that always a complete film strip (F) is introduced into said inspection section, provided its length does not exceed the length of the inspection section.

7. Apparatus according to any one of the preceding claims, wherein essentially at the end of the inspection section (IF), a notch scanner (NS) and an edge notch punch (NP) are disposed, which notch punch copies a notch recognised by the notch scanner (NS) on the edge of a film strip into the carrier strip (T).

**Revendications**

1. Appareil de préparation de bandes de film en vue de leur passage dans un automate de copiage, notamment pour l'exécution de commandes supplémentaires, comportant un dispositif transporteur pour faire passer les bandes de film fixées sur une bande porteuse dans une zone d'observation ainsi qu'un dispositif pour établir ou charger un support de données ou de mémoire contenant les données de copiage des différentes zones d'image des bandes de film en relation avec celles-ci, ce dispositif comportant un clavier à touches pour l'introduction des données de copiage, caractérisé en ce qu'il est prévu un dispositif indicateur non mobile pour les données introduites, en ce qu'au moins une partie (MD) de l'indicateur (MD, FD) s'étend essentiellement le long de la zone d'observation (IF), et en ce qu'il est prévu des moyens électriques (MP) pour faire apparaître une partie des données de copiage introduites dans une relation locale directe avec les zones d'image des bandes de film (F) sur cette partie (MD) de l'indicateur et pour faire déplacer les données apparaissant sur cette partie (MD) de l'indicateur essentiellement en synchronisme avec le mouvement de transport des bandes de film (F) avec conservation de la relation locale directe avec leurs zones d'image.

2. Appareil selon la revendication 1, caractérisé en ce qu'il est prévu des moyens électriques (MP) pour faire apparaître sur la partie précitée (MD) de l'indicateur, dans une relation locale directe avec les zones d'image de la bande de film (F), un repère (C) qui assure le repérage de la zone d'image à laquelle sont associées les données de copiage introduites instantanément.

3. Appareil selon l'une des revendications 1 et 2, caractérisé en ce que les moyens électriques (MP) sont agencés pour faire apparaître des données de nombre de pièces sur la partie précitée d'indicateur (MD).

4. Appareil selon la revendication 2, caractérisé en ce que l'indicateur comporte une seconde partie (FD) et en ce que les moyens électriques (MP) sont agencés pour faire apparaître des données correctives pour la zone d'image précisément repérée par le repère (C) sur cette partie d'indicateur.

5. Appareil selon la revendication 2, caractérisé en ce que les moyens électriques (MP) continuent à faire déplacer le repère (C), après chaque terminaison d'une entrée de données de copiage, automatiquement d'une zone d'image en opposition à la direction de transport de la bande de film et en ce qu'il est prévu une alarme (AG) qui réagit lorsque des données de nombre de pièces sont introduites et lorsqu'aucun repère (C) ne se trouve plus dans la partie d'indicateur (MD).

6. Appareil selon l'une des revendications précédentes, caractérisé en ce qu'il est prévu un détecteur (GS) des intervalles (G) existant entre des bandes de film (F) successives et en ce que ce détecteur (GS) commnde le mouvement d'avancement de la bande de film (F) en coopération avec le dispositif transporteur de manière qu'à chaque fois une bande de film complète (F), pour autant que sa longueur ne dépasse pas celle de la zone d'observation (IF), soit introduite dans la zone d'observation.

7. Appareil selon l'une des revendications précédentes, caractérisé en ce qu'il est prévu essentiellement à la fin de la zone d'observation (IF) un palpeur d'encoches (NS) et un poinçonneur d'encoches (NP), ce dernier reproduisant une encoche (N), détectée par le palpeur d'encoches (NS) dans le bord d'une bande de film, dans la bande porteuse (T).

# Fig. 1

0 059 169

# Fig. 2

# _Fig. 3_

```
        ┌─────────────────────┐
        │   HAUPTPROGRAMM     │
        └─────────────────────┘
                  │
                  ▼
        ┌─────────────────────┐
        │   INITIALISIERUNG   │
        └─────────────────────┘
                  │
                  ▼
        ┌─────────────────────┐
        │  VORSCHUBPROGRAMM   │
        └─────────────────────┘
                  │
                  ▼
        ┌─────────────────────┐
        │  TASTATUR    UND    │
        │  ANZEIGEPROGRAMM    │
        └─────────────────────┘
                  │
                  ▼
        ┌─────────────────────┐
        │  UEBRIGE ROUTINEN   │
        └─────────────────────┘
```

*Fig. 4*

Flussdiagramm: VORSCHUBPROGRAMM

0 059 169

# Fig. 5

TASTATUR-UND ANZEIGEPROGRAMM

NEIN ← WURDE EINE TASTE BE-TÄTIGT ?

JA

STÜCK-ZAHL-TASTE ? — JA →

NEIN

KORREKTURTASTE ? — JA →

NEIN

ORDNE DEM DURCH DEN CURSOR ANGEZEIGTEN NEGA-TIV DIE ENTSPRECHENDE KOR-REKTUR ZU U. ZEIGE SIE IN DER KORREKTURANZEIGE AN

CLEAR-TASTE ? — JA →

NEIN

LÖSCHE ANZEIGE U. SPEICHER DES ZULETZT SPEZIFIZIERTEN NEGATIVS U. SETZE DEN CUR-SOR AN DIE STELLE DER GE-LÖSCHTEN ANZEIGE

AUF-TRAGSAB-SCHLUßTASTE ? — JA →

NEIN

TRANSFER DER NACHBE-STELLDATEN VOM ZWISCHENSPEICHER ZUM DATENTRÄGER

ÜBERMITTLUNG DER STEUERFUNKTION ZUM PROZESSOR

SIND BEREITS ALLE NEGATIVE SPEZIFI-ZIERT ? — JA →

NEIN

SCHREIBE STÜCKZAHL-DATEN ZU DEM DURCH DEN CURSOR ANGEZEIG-TEN NEGATIV U. VERSEHE STÜCKZAHLANZEIGE MIT EINEM PLUSZEICHEN SO-FERN DEM NEGATIV EINE KORREKTUR ZUGE-ORDNET WURDE

SCHIEBE CURSOR EINE NEGATIVLÄNGE NACH LINKS

ALARMTON

RÜCKSPRUNG INS HAUPTPROGRAMM

15